# EUROPÄISCHE PATENTSCHRIFT

(11) **EP 1 897 340 B1**
(45) Veröffentlichungstag und Bekanntmachung des Hinweises auf die Patenterteilung: **13.04.2011**
(21) Anmeldenummer: 06762125.0
(22) Anmeldetag: 21.06.2006
(51) Int. Cl.: H04L 29/12

(54) **VORRICHTUNG UND VERFAHREN ZUM ADRESS-MAPPING**
DEVICE AND METHOD FOR ADDRESS MAPPING
PROCÉDÉ ET DISPOSITIF DE MAPPAGE D'ADRESSES

(43) Veröffentlichungstag der Anmeldung: 12.03.2008
(73) Patentinhaber: Gigaset Communications GmbH, 81379 München (DE)
(72) Erfinder: MÖSKER, Volker, 46419 Isselburg (DE)
(74) Vertreter: Michalski Hüttermann & Partner Patentanwälte
(86) Internationale Anmeldenummer: PCT/EP2006/005968
(87) Internationale Veröffentlichungsnummer: WO 2007/147424

(56) Entgegenhaltungen:
- WO-A-2004/088923
- US-B1- 6 768 743
- RATTANANON S ET AL: "Extending REBEKAH-IP with central port allocations for un-ambiguous IPv4 address expansion" NETWORKS, 2003. ICON2003. THE 11TH IEEE INTERNATIONAL CONFERENCE ON SEPT. 28-OCT. 1, 2003, PISCATAWAY, NJ, USA,IEEE, 28. September 2003 (2003-09-28), Seiten 211-216, XP010683527 ISBN: 0-7803-7788-5

## Beschreibung

Die vorliegende Erfindung bezieht sich auf ein Verfahren zum Adress-Mapping und insbesondere auf ein Verfahren zum Adress-Mapping von Geräten in einem Heim-Netzwerk in einen externen IP-Adressraum.

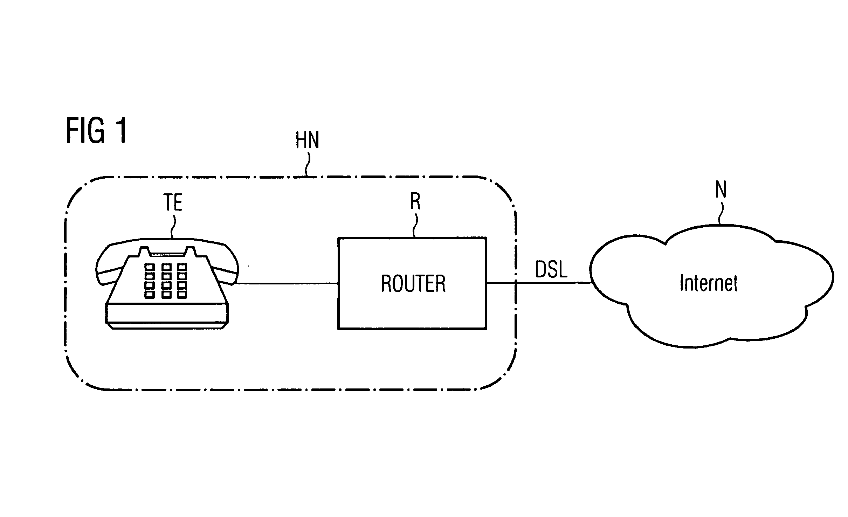

Figur 1 zeigt ein vereinfachtes Blockdiagramm eines Telekommunikationssystems, wobei ein internes Netzwerk HN wie beispielsweise ein Heim-Netzwerk mit einem externen Netzwerk N wie beispielsweise dem Internet verbunden ist. Gemäß Figur 1 kann hierbei zum Beispiel ein Telekommunikationsendgerät TE mit einer sogenannten VoIP-Funktionalität (Voice over IP) an einen Netzwerkknoten bzw. Router R angeschaltet sein, und dieser beispielsweise über eine DSL-Leitung (Digital Subscriber Line) mit dem externen Netzwerk N verbunden sein, das vorzugsweise ein paketvermittelndes Netz darstellt. Auf diese Weise kann beispielsweise IP-Telefonie (Internet Protocol) auch über paketvermittelnde Netze kostengünstig ermöglicht werden.

Üblicherweise sind derartige interne Netzwerke bzw. Heim-Netzwerke HN über sogenannte NAT-Netzwerkknoten (Network Address Translation) bzw. Router R an das Internet N angebunden, wobei ein derartiger Netzwerkknoten R eine NetzwerkAdress/Port-Umwandlung (NA(P)T, Network Address (Port) Translation) aufweist.

Eine Netzwerk-Adressumwandlung ist ein Verfahren, bei dem zum Beispiel eine IP-Adresse (Internet Protocol) in einem Datenpaket durch eine andere ersetzt wird. Eine derartige Netzwerk-Adressumwandlung ist hauptsächlich daher notwendig, da externe IP-Adressen immer knapper werden, und man daher in einem Heim-Netzwerk interne IP-Adressen einsetzt. Damit die Geräte im internen Netzwerk HN trotzdem mit dem externen Netzwerk bzw. dem Internet N kommunizieren können, müssen die internen Adressen in externe Adressen übersetzt bzw. umgewandelt werden. Bei ausgehenden Datenpaketen wird hierbei die interne Quell-IP-Adresse durch eine noch nicht benutzte externe IP-Adresse ersetzt, wobei stich die Netzwerkadress-Umwandlungseinheit diese Umsetzung merkt. Bei eingehenden Datenpaketen kann dann anhand der Ziel-IP-Adresse und dieses Tabelleneintrags festgestellt werden, welches Gerät innerhalb des Heim-Netzwerks HN die Datenpakete angefordert hatte.

Nachteilig ist bei diesem System jedoch, dass einerseits Verbindungen immer von intern bzw. dem Heim-Netzwerk HN initiiert werden müssen, damit der Netzwerkknoten bzw. Router R den internen Kommunikationspartner identifizieren kann. Ferner kennen die internen Netzwerkteilnehmer bzw. Geräte die externe IP-Adresse des Heim-Netzwerks HN nicht, wobei die internen Netzwerkteilnehmer unter Umständen auch die extern verwendeten Portnummern nicht kennen.

Zur Umgehung dieser Nachteile sind derzeit recht aufwändige Konzepte im Einsatz. So scannen beispielsweise "ALGs" (Application Layer Gateways) den Datenverkehr im Netzwerkknoten bzw. Router R, wobei sie den Datenverkehr anhand von applikationsspezifischen Merkmalen klassifizieren und entsprechend manipulieren, indem sie zum Beispiel IP-Adressen und Portnummern austauschen.

Ferner kann das sogenannte port Forwarding/Virtuelle Server" verwendet werden, bei dem ein Benutzer statische Routen im Netzwerkknoten R definieren kann, um eine extern initiierte Kommunikation zu ermöglichen. Hierbei muss jedoch ein Benutzer mit IP-Adressen und Portnummern sehr vertraut sein.

Abschließend sei noch das sogenannte "Port Triggering" genannt, bei dem anhand von Applikationscharakteristika, die stich jedoch ändern können und für neue Applikationen beim Verkauf eines Systems unbekannt sind, zeitlich limitierte statische Routen bei ausgehenden Verbindungen für eingehende Verbindungen freigeschaltet werden. Eine eindeutige Zuordnung kann jedoch wiederum nicht eingehalten werden, weshalb vor allem Verschlüsselungsverfahren auf Netzwerk- und Transportebene große Probleme aufweisen.

WO 2004/088923 A1 beschreibt ein Verfahren und ein System zum zentralen Zuteilen von Adressen und Portnummern.

US 6,768,743 B1 zeigt ein Verfahren und ein System zur Adress-Umleitung bei einem System mit mehreren Netzwerken unterschiedlicher Adressierung.

Der Erfindung liegt daher die Aufgabe zu Grunde ein Verfahren zum Adress-Mapping bereitzustellen, mit dem Geräte innerhalb eines Heim-Netzwerks unmittelbar von extern angesprochen bzw. adressiert werden können.

Erfindungsgemäß wird diese Aufgabe durch die Maßnahmen des Patentanspruchs 1 gelöst.

Bei dem Verfahren zum Adress-Mapping werden zunächst zumindest eine Portnummer für einen Netzwerkdienst angefragt, die angefragte Portnummer anschließend bei einer Netzwerkadress-Umwandlungseinheit angefordert, die angeforderte Portnummer daraufhin bestätigt oder eine alternative Portnummer ausgegeben, die bestätigte oder alternative Portnummer daraufhin durch den Netzwerkdienst angenommen oder abgelehnt und abschließend ein eingehender Datenverkehr in der Netzwerkadress-Umwandlungseinheit an den Netzwerkdienat durchgeschaltet, falls die portnummer angenommen wurde.

Insbesondere durch die Verwendung eines Konfigurations-Clients zum Anfragen von für einen Netzwerkdienst bestimmten Portnummern und eines Konfigurations-Servers zum Anfordern der angefragten Portnummern bei einer Netzwerkadress-Umwandlungseinheit, wobei die Netzwerkadress-Umwandlungseinheit eine externe Netzwerk-Adresse mit der angeforderten Portnummer direkt dem Netzwerkdienst zuordnet, kann erstmalig eine unmittelbare Adressierung von Geräten innerhalb eines Heim-Netzwerks ohne herkömmliche Adrees-Umwandlung durchgeführt werden. Auf diese Weise können bestimmte Geräte, die von extern nur über eine limitierte Anzahl von Portnummern erreichbar sein müssen, wie zum Beispiel VoIP-Telefonen, Webkameras, dedizierte Webserver usw., direkt in einem externen IP-Adressraum gemappt werden.

Vorzugsweise weist der Konfigurations-Client einen DHCP-Client (Dynamic Host Configuration Protocol) und der Konfigurations-Server einen DHCP-Server auf. Ein derartiges Protokoll steht für eine Vielzahl von Netzwerkknoten und insbesondere für Netzwerkadress-Umwandlungseinheiten zur Verfügung, so dass eine Realisierung äußerst kostengünstig erfolgen kann.

Vorzugsweise kann die Netzwerkadress-Umwandlungseinheit bei nicht verfügbarer angeforderter Portnummer eine verfügbare alternative Portnummer vorschlagen, wodurch sich eine Konfiguration wesentlich vereinfachen lässt.

Beispielsweise kann die Netzwerkadress-Umwandlungseinheit und der Konfigurations-Server in einem Netzwerkknoten bzw. Router und der Konfigurations-Client sowie der Netzwerkdienst in einem Telekommunikationsendgerät wie beispielsweise einem Telefon realisiert sein. Auf diese Weise können beliebige Geräte eines Heim-Netzwerks direkt in den externen IP-Adressraum mittels eines Netzwerkknotens gemappt werden.

Alternativ können die Funktionalitäten der Netzwerkadress-Umwandlungseinheit, des Konfigurations-Servers, des Konfigurations-Clients und des Netzwerkdienstes auch in nur einem Telekommunikationsendgerät realisiert sein, wodurch man eine sogenannte Stand-alone-Lösung des Systems erhält, welches unmittelbar an ein externes Netzwerk angeschaltet werden kann. Obwohl als Netzwerkdienst vorzugsweise ein VoIP-Dienst zur Realisierung einer IP-Telefonie in Betracht kommt, sind grundsätzlich auch Webkameras, Webserver und dergleichen denkbar.

In den weiteren Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:
Figur 1 ein vereinfachtes Blockdiagramm zur Veranschaulichung eines Telekommunikationssystems mit einem Heim-Netzwerk und einem externen Netzwerk;
Figur 2 eine vereinfachte Blockdarstellung zur Veranschaulichung des Heim-Netzwerks mit einem Telekommunikationsendgerät und einem Netzwerkknoten;
Figur 3A ein Sequenzdiagramm gemäß einem ersten Ausführungsbeispiel;
Figur 3B ein Sequenzdiagramm gemäß einem zweiten Ausführungsbeispiel;
Figur 4A eine vereinfachte Darstellung eines externen Adressraums eines Netzwerkknotens vor dem Durchschalten des Datenverkehrs;
Figur 4B eine vereinfachte Darstellung des externen Adressraums nach dem erfindungsgemäßen Durchschalten des Datenverkehrs; und
Figur 5 ein Flussdiagramm zur Veranschaulichung wesentlicher Schritte des erfindungsgemäßen Verfahrens zum Adress-Mapping.

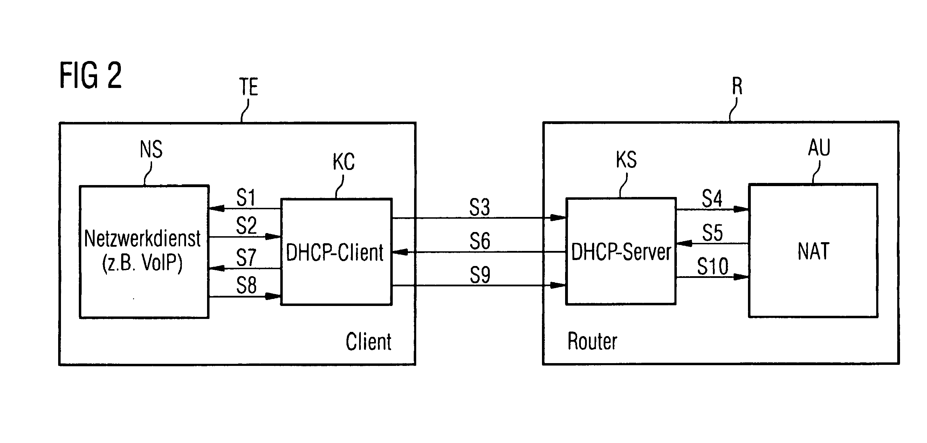

Figur 2 zeigt eine vereinfachte Blockdarstellung eines internen Netzwerks bzw. Heim-Netzwerks HN mit einem Netzwerkknoten bzw. Router R und einem daran angeschlossenen Telekommunikationsendgerät TE wie beispielsweise einem IP-Telefon (Internet Protocol).

Der Netzwerkknoten R weist eine Netzwerkadress-Umwandlungseinheit AU auf (NAT, Network Address Translation), die eine externe Netzwerk-Adresse in eine interne Netzwerk-Adresse übersetzt bzw. umwandelt und in umgekehrter Richtung eine interne Netzwerk-Adresse in eine externe Netzwerk-Adresse umwandelt. Der Netzwerkknoten bzw. Router R kann gemäß Figur 1 beispielsweise über eine DSL-Leitung mit einem paketvermittelnden Netzwerk N wie zum Beispiel dem Internet verbunden sein.

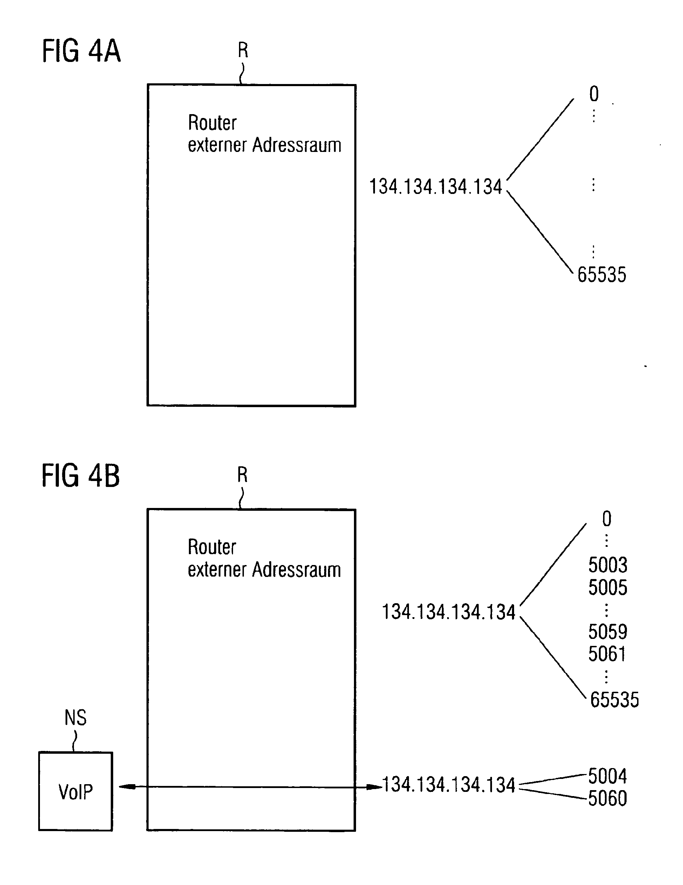

Figur 4A zeigt den externen Adressraum des Netzwerkknotens R, wobei die externe Netzwerk-Adresse, z.B. IP-Adresse (Internet Protocol), im Beispiel 134.134.134.134 sei, die ferner über die Portnummern 0 bis 65535 verfügt. Erfindungsgemäß sollen nunmehr aus diesem externen Adressraum die Portnummern 5004 und 5060 einem Netzwerkdienst NS wie zum Beispiel einem VoIP-Dienst (Voice over IP) zur unmittelbaren Adressierung zugewiesen werden.

Gemäß Figur 2 weist der Netzwerkknoten R hierfür neben der Netzwerkadress-Umwandlungseinheit AU einen Konfigurations-Server KS zum Konfigurieren der Netzwerkadress-Umwandlungseinheit AU auf. Der Netzwerkknoten R bzw. dessen Konfigurations-Server KS ist über eine interne Datenleitung wie beispielsweise ein LAN (Local Area Network) mit einem Telekommunikationsendgerät TE bzw. dessen Konfigurations-Client KC verbunden. Ferner weist das Telekommunikationsendgerät TE einen Netzwerkdienst NS auf, der wiederum vom Konfigurations-Client KC angesprochen werden kann. Der Netzwerkdienst NS kann zur Realisierung eines IP-Telefongeräts beispielsweise einen VoIP-Dienst (Voice over IP) darstellen. Der Netzwerkdienst NS kann hierbei über eine interne Netzwerk-Adresse des internen Netzwerks HN angesprochen werden.

Zur Realisierung einer dem Netzwerkdienst NS direkt zugeordneten externen Netzwerk-Adresse bzw. externen IP-Adresse kann der Konfigurations-Client KC zunächst beim Netzwerkdienst NS zumindest eine für diesen Netzwerkdienst NS bestimmte Portnummer erfragen. Diese beim Netzwerkdienst NS erfragte zumindest eine Portnummer wird daraufhin vom Konfigurations-Client KC zum Konfigurations-Server KS kommuniziert, der seinerseits bei der Netzwerkadress-Umwandlungseinheit AU die zumindest eine angefragte Portnummer anfordert, wobei die Netzwerkadress-Umwandlungseinheit AU schließlich ihre externe Netzwerk-Adresse mit der zumindest einen angeforderten Portnummer dem Netzwerkdienst NS direkt zuordnet und somit ein Durchschalten eines Datenverkehrs unmittelbar bis zum Netzwerkdienst NS ermöglicht. Eine üblicherweise in der Netzwerkadress-Umwandlungseinheit AU durchgeführte Adress-Umwandlung bzw. -Übersetzung findet hierbei nicht länger statt.

Der nach einer derartigen Konfiguration vorliegende Adressraum des Netzwerkknotens bzw. Routers R ist in Figur 4B dargestellt, wobei nunmehr für die beim Netzwerkdienst NS angefragten Portnummern 5004 und 5060 die externen Netzwerk-Adressen 134.134.134.134:5004 und 134.134.134.134:5060 für den Netzwerkdienst NS reserviert wurden, die direkt zu dessen internen Adressen durchgeschaltet sind. Im verbleibenden externen Adressraum des Netzwerkknotens R fehlen nunmehr die Portnummern 5004 und 5060, weshalb der externen IP-Adresse 134.134.134.134 des Netzwerkknotens R nur noch die Portnummern 0 bis 5003, 5005 bis 5059 und 5061 bis 65535 zugeordnet sind.

Optional können die üblicherweise beim Netzwerkdienst NS angefragten Portnummern auch bereits vorgegeben sein, wodurch eine entsprechende Anfrage entfällt. Beispielsweise können die gewünschten Portnummern im Konfigurations-Client KC oder im Konfigurations-Server KS vorliegen.

Gemäß Figur 2 stellt der Konfigurations-Client KC vorzugsweise einen DHCP-Client zum Durchführen des sogenannten "Dynamic Host Configuration Protokolls" dar, während der Konfigurations-Server KS im Netzwerkknoten R einen zugehörigen DHCP-Server darstellt. Dieses insbesondere für das Internet genutzte Protokoll liegt in einer Vielzahl von Telekommunikationsendgeräten TE und/oder Netzwerkknoten R ohnehin vor, weshalb sich die vorliegende Erfindung besonders einfach und kostengünstig realisieren lässt. Das DHCP dient hierbei insbesondere dazu, IP-Adressen automatisch zu vergeben und dadurch die Verwaltung von IP-Netzen zu vereinfachen.

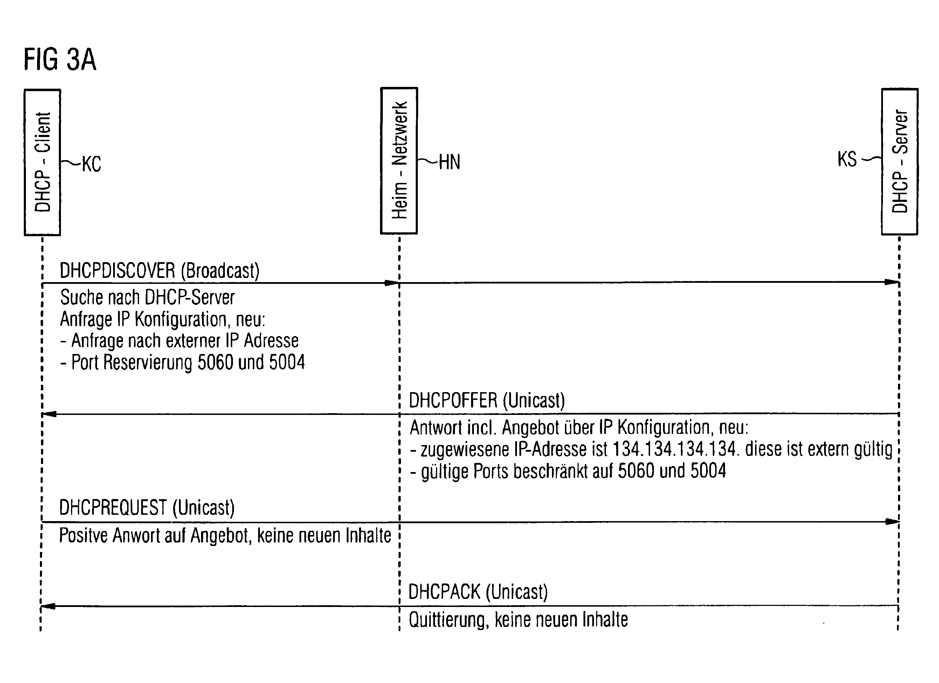

Figur 3A zeigt eine vereinfachte Darstellung eines Sequenzdiagramms, wobei der Konfigurations-Client KC ein derartiger DHCP-Client und der Konfigurations-Server KS ein derartiger DHCP-Server ist. Der Netzwerkdienst NS stellt zur Realisierung eines IP-Telefons beispielsweise einen VoIP-Dienst dar, wobei der Netzwerkknoten R wiederum die externe Netzwerk-Adresse bzw. IP-Adresse 134.134.134.134 aufweist.

Gemäß Figur 3A wird zunächst vom DHCP-Client KC über die Broadcast-Meldung "DHCPDISCOVER" eine IP-Konfigurationsanfrage durchgeführt und nach einem geeigneten DHCP-Server KS gesucht. Genauer gesagt wird hierbei nach der externen IP-Adresse des Systems angefragt und eine Portreservierung für z.B. die Portnummern 5060 und 5004 durchgeführt, die üblicherweise dem VoIP-Dienst zugeordnet werden sollen. Vom DHCP-Server KS wird diese Anfrage mit einer Unicast-Meldung "DHCPOFFER" beantwortet, wobei die zugewiesene IP-Adresse "134.139.134.139" als extern gültige Netzwerk-Adresse mitgeteilt wird und die Ports auf die gewünschten Portnummern 5060 und 5004 beschränkt werden.

Der DHCP-Client KC beantwortet dieses Angebot per Unicast-Meldung "DHCPREQUEST" wobei keine neuen Inhalte übermittelt werden. Der DHCP-Server KS quittiert schließlich diese positive Antwort per Unicast-Meldung "DHCPACK", wobei wiederum keine neuen Inhalte übermittelt werden. Auf diese Weise kann vom Konfigurations-Client KC zum Konfigurations-Server KS eine angebotene Portnummerkonfiguration bestätigt werden.

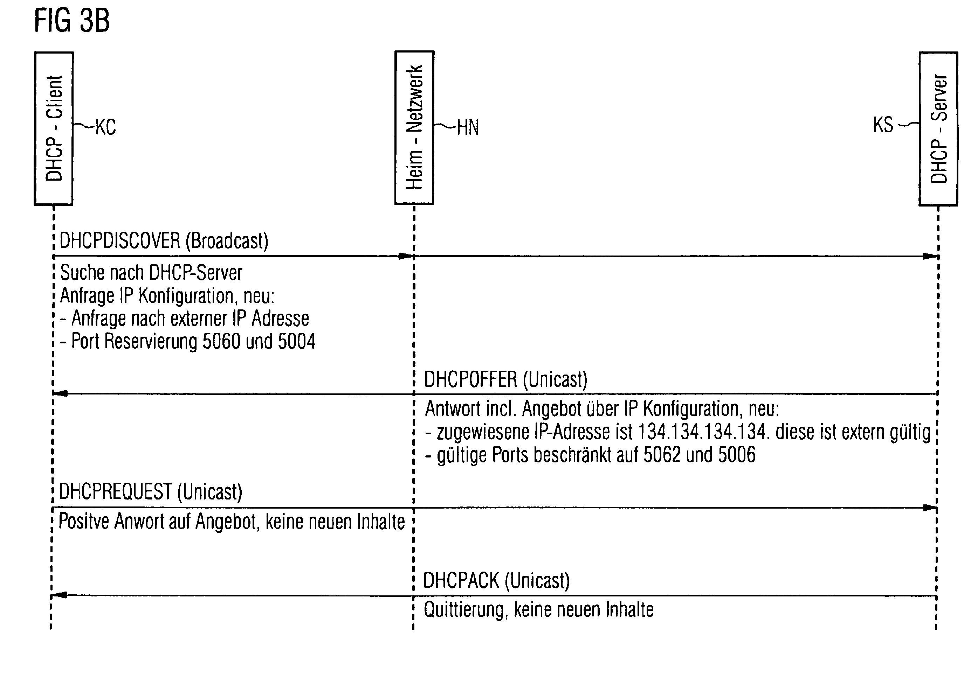

Figur 3B zeigt nunmehr eine vereinfachte Darstellung eines Sequenzdiagramms gemäß einem zweiten Ausführungsbeispiel, wobei nicht die vom Netzwerkdienst oder Konfigurations-Client KC gewünschten Portnummern, sondern alternative Portnummern serverseitig vorgeschlagen werden und diese vom Konfigurations-Client angenommen werden.

Gemäß Figur 3B wird wiederum über eine Broadcast-Meldung "DHCPDISCOVER" nach einem geeigneten DHCP-Server im Heim-Netzwerk gesucht und eine IP-Konfigurationsanfrage gestartet, wobei nach der externen IP-Adresse gefragt wird und eine Portreservierung für z.B. die Portnummern 5060 und 5004 durchgeführt wird. Für den Fall, dass die nicht dargestellte Netzwerkadress-Umwandlungseinheit die gewünschten Portnummern 5060 und 5004 bereits vergeben hat oder diese nicht zur Verfügung stehen, kann die Netzwerkadress-Umwandlungseinheit AU nunmehr alternative Portnummern vorschlagen, wobei der DHCP-Server KS in einer Unicast-Meldung "DHCPOFFER" mitteilt, dass die zugewiesene externe IP-Adresse 134.134.134.134 lautet und zudem extern gültig ist, wobei jedoch die Ports auf die alternativ vorgeschlagenen Portnummern 5062 und 5006 beschränkt werden.

In seiner Unicast-Meldung "DHCPREQUEST" kann der DHCP-Client KC nunmehr dieses Angebot bzw. diese Antwort des DHCP-Servers KS positiv beantworten, sofern er mit den alternativ vorgeschlagenen Portnummern 5062 und 5006 einverstanden ist, wobei keine neuen Inhalte übermittelt werden. Mit der Unicast-Meldung "DHCPACK" wird eine derartige positive Antwort vom DHCP-Server KS quittiert, wobei wiederum keine neuen Inhalte übermittelt werden. Auf diese Weise kann unter Verwendung einer DHCP-Umgebung eine Zuweisung einer externen Netzwerk-Adresse zu einem Gerät oder Netzwerkdienst NS innerhalb eines Heim-Netzwerks HN einfach durchgeführt werden.

Demzufolge werden die Nachteile des herkömmlichen NAT-Konzeptes umgangen, wobei bestimmte Geräte innerhalb des Heim-Netzwerks, welche von extern nur über eine limitierte Anzahl von Ports bzw. Portnummern erreichbar sein müssen, wie zum Beispiel VoIP-Telefone, Webkameras, Webserver usw., direkt in den externen IP-Adressraum gemappt werden.

Im Falle einer DHCP-Umgebung wird dies durch einen erweiterten DHCPREQUEST realisiert, der neben den heute üblichen Parametern ferner eine Anfrage über die extern gültige IP-Adresse des Systems, eine Auflistung der Portnummern, über die das Gerät von außen erreichbar sein muss, und die Portnummern enthält, die das Gerät für eine ausgehende Verbindung nutzt. Das Gerät bittet hierbei um Zuteilung der externen IP-Adresse und der gewünschten Portnummern, wobei der Netzwerkknoten R mit seiner Netzwerkadress-Umwandlungseinheit AU die Anfrage prüft und die angefragten Parameter dem Gerät erteilt, falls die Ports bzw. Portnummern nicht schon einem anderen Gerät zugewiesen wurden.

Sind die Parameter schon vergeben, so bekommt das Gerät eine negative Antwort und kann einen erneuten "Request" stellen, der nunmehr andere Portnummern enthalten kann. Wie vorstehend beschrieben wurde, kann in der negativen Antwort auch ein Alternativvorschlag mit anderen Portnummern enthalten sein.

Grundsätzlich kann das Konzept bei beliebigen Portnummern auch mittels einer expliziten Aushandlung der Portnummern erfolgen, indem das Gerät keine Portnummern vorgibt, sondern nur angibt, wie viele Ports benötigt werden. Um eine Mehrfachvergabe von Portnummern zu vermeiden, muss der Netzwerkknoten R bzw. dessen Netzwerkadress-Umwandlungseinheit AU die reservierten Adressen bzw. Portnummern für das Gerät aus seiner Liste der verfügbaren Portnummern streichen, bzw. als nicht verfügbar markieren.

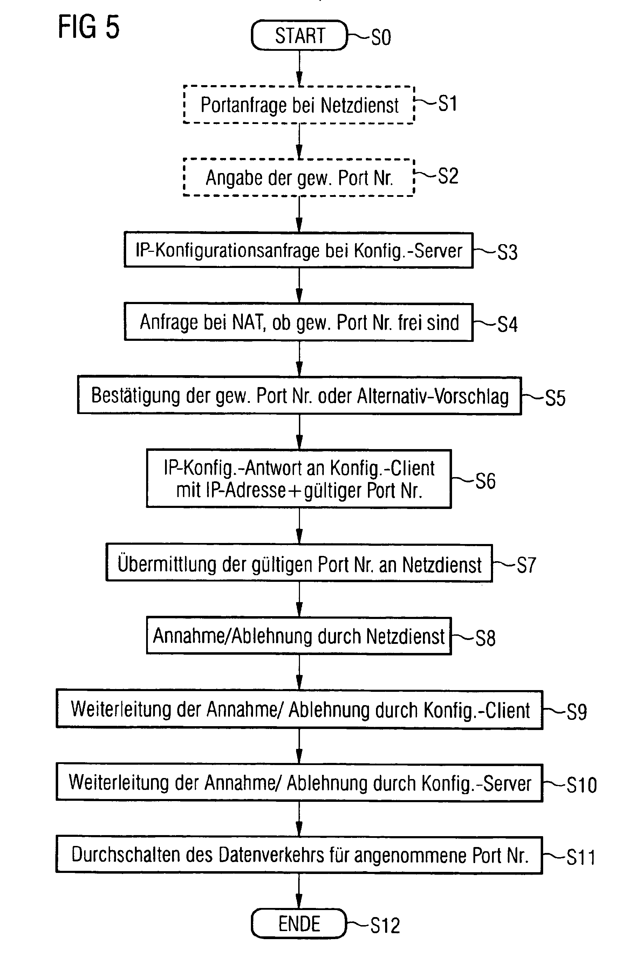

Nachfolgend wird das erfindungsgemäße Verfahren zum Adress-Mapping beschrieben, wobei die in Figur 2 dargestellten Pfeile S1 bis S10 entsprechende Verfahrensschritte darstellen, wie sie in Figur 5 dargestellt sind. Figur 5 zeigt demzufolge ein Flussdiagramm zur Veranschaulichung von wesentlichen Verfahrensschritten bei der Realisierung des erfindungsgemäßen Adress-Mappings.

Nach einem Start in Schritt S0 wird zunächst in einem Schritt S1 vom DHCP-Client KC beim Netzwerkdienst NS eine Anfrage gemacht, welche Ports bzw. Portnummern benötigt bzw. gewünscht werden. Dieser optionale Verfahrensschritt kann auch entfallen, wenn die benötigten Ports bzw. Portnummern bereits im DHCP-Client fest eingestellt sind. Für den Fall, dass sie nicht im DHCP-Client KC fest eingestellt sind, kann im ebenfalls optionalen Schritt S2 vom Netzwerkdienst NS eine Antwort an den DHCP-Client KC gegeben werden, in der die gewünschten Portnummern angegeben sind.

Für das vorstehend beschriebene Beispiel eines VoIP-Dienstes werden zum Beispiel die üblichen Portnummern 5060 und 5004 als gewünschte Portnummern ausgegeben. In einem Schritt S3 erfolgt nunmehr eine IP-Konfigurationsanfrage beim Konfigurations-Server KS, wobei der Konfigurations-Client KC eine Anfrage an den Konfigurations-Server KS stellt, bei der er um die Zuweisung einer externen IP-Adresse und den gewünschten Portnummern 5060 und 5004 bittet.

In einem Schritt S4 wird diese Anfrage vom DHCP-Server KS an die Netzwerkadress-Umwandlungseinheit AU weitergegeben, wobei angefragt wird, ob die angeforderten Ports bzw. Portnummern 5060 und 5004 noch frei sind. In einem Schritt S5 erfolgt nunmehr eine Beantwortung dieser Anfrage von der Netzwerkadress-Umwandlungseinheit AU an den DHCP-Server KS, wobei eine positive Bestätigung für die gewünschten Portnummern erfolgt, wenn diese noch frei verfügbar sind, oder eine negative Antwort ausgegeben wird. Für den Fall einer negativen Beantwortung kann optional eine (oder mehrere) alternative Portnummer(n) ausgegeben bzw. vorgeschlagen werden, die für den externen Adressraum noch frei verfügbar ist(sind).

Im Schritt S6 erfolgt nunmehr eine IP-Konfigurations-Antwort vom DHCP-Server KS an den DHCP-Client KC mit Angabe der Netzwerkkonfiguration und den von der Netzwerkadress-Umwandlungseinheit AU als frei verfügbar gemeldeten Portnummern.

In einem Schritt S7 werden diese Portnummern vom Konfigurations-Client KC an den Netzwerkdienst NS weitergeleitet bzw. übermittelt, wobei in einem Schritt S8 der Netzwerkdienst NS diese übermittelten Portnummern entweder annehmen oder ablehnen kann, wobei er eine negative Rückmeldung verschickt. In Schritt S9 wird diese positive oder negative Rückmeldung vom DHCP-Client KC an den Konfigurations-Server KS weitergeleitet.

Falls die Portnummern vom Netzwerkdienst nicht akzeptiert wurden bzw. eine Ablehnung vorliegt, kann der Konfigurations-Client KC eine erneute Anfrage gemäß Schritt S1 oder S3 starten. Falls die Portnummern vom Netzwerkdienst NS akzeptiert bzw. angenommen wurden, so werden diese Portnummern vom Konfigurations-Server KS an die Netzwerkadress-Umwandlungseinheit AU als belegt gemeldet. In einem Schritt S11 wird daraufhin der Datenverkehr für die angenommenen Portnummern in der Netzwerkadress-Umwandlungseinheit AU durchgeschalten und die Portnummern entsprechend als nicht länger verfügbar markiert. Das Verfahren endet in einem Schritt S12.

Gerät bzw. Netzwerkdienst und Netzwerkknoten bzw. Router R konfigurieren somit ihre Listen mit verfügbaren Portnummern, wodurch das Gerät bzw. der Netzwerkdienst NS nur die ihm zugewiesenen Portnummern für seine Kommunikation nutzt und der Netzwerkknoten R diese Portnummern aus seiner Liste ausblendet. Auf diese Weise erhält jedes entsprechend konfigurierte interne Gerät eine eindeutige externe IP-Adresse.

Ist das Konfigurationsangebot vom Konfigurations-Server KS nicht akzeptabel, so kann der Konfigurations-Client KC die Meldung "DHCPDECLINE" an den Konfigurations-Server KS senden, wobei das Aushandeln erneut erfolgt. Die Parameter wie zum Beispiel Portnummern können sich hierbei wiederum verändern.

Ferner besteht die Möglichkeit, dass sich der Netzwerkdienst NS entscheidet, mit einer nur intern gültigen IP-Adresse zu leben, wobei wiederum eine herkömmliche Adress-Umwandlung durchgeführt werden muss.

Die Erfindung wurde vorstehend anhand eines VoIP-Dienstes zur Realisierung eines IP-Telefons beschrieben. Sie ist jedoch nicht darauf beschränkt und umfasst in gleicher Weise auch Web-Kameras oder dedizierte Web-Server als Netzwerkdienste. In gleicher Weise wurde die vorliegende Erfindung anhand eines DHCP-Client und -Server als Konfigurations-Client und - Server beschrieben. Sie ist jedoch nicht darauf beschränkt und umfasst in gleicher Weise auch alternative Konfigurations-Clients und -Server.

Ferner wurde vorstehend eine Lösung beschrieben, bei der das Telekommunikationsendgerät getrennt vom Netzwerkknoten im Heim-Netzwerk ausgebildet ist. Die Erfindung ist jedoch nicht darauf beschränkt und umfasst in gleicher Weise auch Geräte, bei denen die Netzwerkadress-Umwandlungseinheit, der Konfigurations-Server, der Konfigurations-Client und der Netzwerkdienst in einem Endgerät eines Heim-Netzwerks realisiert sind.

### Bezugszeichenliste

- TE: Telekommunikationsendgerät
- R: Netzwerkknoten
- N: externes Netzwerk
- HN: internes Netzwerk
- NS: Netzwerkdienst
- KC: Konfigurations-Client
- KS: Konfigurations-Server
- AU: Netzwerkadress-Umwandlungseinheit
- S0 bis S12: Verfahrensschritte

## Patentansprüche

1. Verfahren zum Adress-Mapping mit den Schritten:
Ermitteln (S1 bis S3) von zumindest einer für einen Netzwerkdienst (NS) gewünschten Portnummer;
Anfordern (S4) der gewünschten Portnummer bei einer Netzwerkadress-Umwandlungseinheit (AU);
**gekennzeichnet durch** die weiteren Schritte: Beantwortung **durch** eine positive Bestätigung der angeforderten Portnummer und, für den Fall einer negativen Beantwortung, Ausgabe einer alternativen portnummer (S5 bis S7);
Annchmen/Ablehnen (S8 bis S10) der bestätigten beziehungsweise alternativen Portnummer **durch** den Netzwerkdienst (NS); und
Durchschalten (S11) eines eingehenden Datenverkehrs in der Netzwerkadress-Umwandlungseinheit (AU) an den Netzwerkdienst (NS), falls eine Annahme der angeforderten Portrmznmer vorliegt.

2. Verfahren nach Patentanspruch 1,
**dadurch gekennzeichnet, dass** beim Ermitteln der Portnummer:
eine Portnummern-Anfrage (S1) beim Netzwerkdienst. (NS);
eine Ausgabe (S2) der gewünschten Portnummern vom Netzwerkdienst (NS); und
eine Konfigurationsanfrage (S3) von einem Konfigurations-Client (KC) bei einem Konfigurations-Server (KS) für die ausgegebene Portnummer durchgeführt wird.

3. Verfahren nach einem der Patentansprüche 1 oder 2,
**dadurch gekennzeichnet, dass** beim Anfordern (S4) der gewünschten Portnummer eine Verfügbarkeit in einer Potnummern-Liste der Netzwerkadress-Umwandlungseinheit (AU) geprüft wird.

4. Verfahren nach einem der Patentansprüche 1 bis 3,
**dadurch gekennzeichnet, dass** beim Bestätigen beziehungsweise beim Ausgeben einer alternativen Portnummer die angeforderte Portnummer als frei bestätigt oder eine freie alternative Portnummer durch die Netzwerkadress-Umwandlungseinheit (AU) ausgegeben wird (S5);
die bestätigte beziehungsweise alternative Portnummer mit der externen Netzwerk-Adresse der Netzwerkadress-Umwandlungseinheit (AU) an den Konfigurations-Client (KC) weitergeleitet wird (S6); und
die weitergeleitete Portnummer mit der externen Netzwerk-Adresse an den Netzwerkdienst (NS) übermittelt wird (S7).

5. Verfahren nach einem der Patentansprüche 1 bis 4,
**dadurch gekennzeichnet, dass** beim Annehmen/Ablehnen der bestätigten beziehungsweise altenativen Portnummer:
der Netzwerkdienst (NS) die übermittelte Portnummer annimmt oder ablehnt (S8);
die Annahme/Ablehnung an den Konfigurations-Server (KS) weitergeleitet wird (S9); und
der Konfigurations-Server (KS) die bestätigte beziehungsweise alternative Portnummer als belegt an die Netawerkadress-Umwandlungseinheit (AU) übermittelt, falls eine Annahme vorliegt (S10).

6. Verfahren nach einem der Patentansprüche 1 bis 5,
**dadurch gekennzeichnet, dass** beim Durchschalten des Datenverkehrs für die angenommene Portnummer, diese Portnummer in einer Portnummernliste als nicht verfügbar markiert wird.

7. Verfahren nach einem der Patentansprüche 1 bis 6,
**dadurch gekennzeichnet, dass** das Anfragen, Bestätigen und Annehmen/Ablehnen der Portnummer nach dem DHCP-Protokoll durchgeführt wird.

8. Verfahren nach einem der Patentansprüche 1 bis 7,
**dadurch gekennzeichnet, dass** der Netzwerkdienst (NS) einen VoIP-Dienst darstellt.

## Claims

1. Method for address mapping comprising the steps:
Determining (S1 to S3) at least one port number required for a network service (NS);
requesting (S4) the required port number at a network address conversion unit (AU);
**characterized by** the further steps: response by a positive confirmation of the requested port number and in the case of a negative confirmation output of an alternative port number (S5 to S7);
accepting/rejecting (S8 to S10) the confirmed or alternative port number, respectively by the network service (NS), and
switching through (S11) incoming data traffic in the network address conversion unit (AU) to the network service (NS) if an acceptance of the requested port number is present.

2. Method according to Claim 1, **characterized in that** during the determining of the port number:
a port number request (S1) at the network service (NS);
an output (S2) of the required port number by the network service (NS); and
a configuration request (S3) by a configuration client (KC) at a configuration server (KS) for the port number output is carried out.

3. Method according to one of Claims 1 or 2, **characterized in that** during the requesting (S4) of the required port number, an availability is checked in a port number list of the network address conversion unit (AU).

4. Method according to one of Claims 1 to 3, **characterized in that** during the confirming or outputting of an alternative port number, respectively, the requested port number is confirmed as being free or a free alternative port number is output by the network address conversion unit (AU) (S5);
the confirmed or alternative port number, respectively, is forwarded (S6) with the external network address of the network address conversion unit (AU) to the configuration client (KC); and
the forwarded port number with the external network address is transferred (S7) to the network service (NS).

5. Method according to one of Claims 1 to 4, **characterized in that** during the accepting/rejecting of the confirmed or alternative, respectively, port number:
the network service (NS) accepts or rejects (S8) the transferred port number;
the acceptance/rejection is forwarded (S9) to the configuration server (KS); and the configuration server (KS) transfers the confirmed or alternative, respectively, port number as occupied to the network address conversion unit (AU) if an acceptance is present (S10).

6. Method according to one of Claims 1 to 5, **characterized in that** during the switching through of the data traffic for the accepted port number, this port number is marked as not available in a port number list.

7. Method according to one of claims 1 to 6, **characterized in that** the requesting, confirming and accepting/rejecting of the port numbers is carried out in accordance with the DHCP protocol.

8. Method according to one of Claims 1 to 7, **characterized in that** the network service (NS) represents a VoIP service.

## Revendications

1. Procédé de mappage ou de mise en correspondance d'adresses comportant les étapes suivantes :
- détermination (S1 à S3) d'au moins un numéro de port souhaité pour un service de réseau (NS) ;
- demande (S4) du numéro de port souhaité auprès d'une unité de conversion d'adresse de réseau (AU) ;
**caractérisé par** les autres étapes suivantes :
- réponse avec une confirmation positive du numéro de port demandé et, dans le cas d'une réponse négative, délivrance d'un numéro de port alternatif (S5 à S7) ;
- acceptation / refus (S8 à S10) respectivement du numéro de port confirmé ou du numéro de port alternatif par le service de réseau (NS) ;
- et commutation (S11) d'un trafic de données entrant dans l'unité de conversion d'adresse de réseau (AU) vers le service de réseau (NS) si le numéro de port demandé a été accepte.

2. Procédé selon la revendication 1, **caractérisé en ce que**, lors de la détermination du numéro de port, on effectue :
- une demande de numéro de port (S1) auprès du service de réseau (NS) ;
- une délivrance (S2) du numéro de port souhaité par le service de réseau (NS) ; et
- une demande de configuration (S3) par un client de configuration (KC) auprès d'un serveur de configuration (KS) pour le numéro de port délivré.

3. Procédé selon l'une des revendications 1 ou 2, **caractérisé en ce que**, lors de la demande (S4) du numéro de port souhaité, on en vérifie la disponibilité sur une liste de numéro de ports de l'unité de conversion d'adresse de réseau (AU).

4. Procédé selon l'une des revendications 1 à 3, **caractérisé en ce que**,
- lors de la confirmation respectivement lors de la délivrance d'un numéro de port alternatif, on confirme le numéro de port demandé comme étant libre ou on délivre un numéro de port alternatif libre au moyen de l'unité de conversion d'adresse de réseau (AU) (S5) ;
- on retransmet respectivement le numéro de port confirmé ou le numéro de port alternatif avec l'adresse de réseau externe de l'unité de conversion d'adresse de réseau (AU) au client de configuration (KC) (S6) ; et
- on transmet le numéro de port retransmis avec l'adresse de réseau externe au service de réseau (NS) (S7).

5. Procédé selon l'une des revendications 1 à 4, **caractérisé en ce que**, lors de l'acceptation / refus respectivement du numéro de port confirmé ou du numéro de port alternatif :
- le service de réseau (NS) accepte ou refuse le numéro de port transmis (S8) ;
- on retransmet l'acceptation / refus au serveur de configuration (KS) (S9) ; et
- s'il y a acceptation, le serveur de configuration (KS) transmet comme étant occupé respectivement le numéro de port confirmé ou le numéro de port alternatif à l'unité de conversion d'adresse de réseau (AU) (S10).

6. Procédé selon l'une des revendications 1 à 5, **caractérisé en ce que**, lors de la commutation du trafic de données pour le numéro de port accepté, on marque ce numéro de port sur une liste de numéros de port comme étant indisponible.

7. Procédé selon l'une des revendications 1 à 6, **caractérisé en ce que** la demande, la confirmation et l'acceptation / refus des numéros de port s'effectuent conformément au protocole DHCP.

8. Procédé selon l'une des revendications 1 à 7, **caractérisé en ce que** le service de réseau (NS) représente un service VoIP.
